# EUROPÄISCHE PATENTSCHRIFT

(11) **EP 1 288 538 B1**
(45) Veröffentlichungstag und Bekanntmachung des Hinweises auf die Patenterteilung: **07.01.2009**
(21) Anmeldenummer: 02009347.2
(22) Anmeldetag: 03.05.2002
(51) Int. Cl.: F16J 15/32

(54) **Abstreifer**
Scraper
Racleur

(30) Priorität: 27.08.2001 DE 10140730
(43) Veröffentlichungstag der Anmeldung: 05.03.2003
(73) Patentinhaber: Carl Freudenberg KG, 69469 Weinheim (DE)
(72) Erfinder: Watling, Simon, Blyth, NE24 2PR, Northumberland (GB)

(56) Entgegenhaltungen:
- DE-A1- 2 113 557
- DE-A1- 2 614 888
- DE-A1- 3 319 696
- DE-A1- 3 601 349
- DE-B- 1 270 903
- DE-C1- 3 813 037
- DE-C1- 4 324 529
- DE-U1- 8 802 162
- US-A- 4 509 763

## Beschreibung

### Technisches Gebiet

Die Erfindung betrifft einen Abstreifer.

### Stand der Technik

Ein Abstreifer ist beispielsweise aus der DE 38 13 037 C1 bekannt. Der Abstreifer umfasst einen radial innen angeordneten Lippenring, der von einem radial außen angeordneten Stützkörper außenumfangsseitig umschlossen ist. Der Lippenring besteht aus PTFE und stützt sich während seiner bestimmungsgemäßen Verwendung auf einer in axialer Richtung hin- und herbeweglichen Stange ab. Der Stützkörper besteht demgegenüber aus einem elastomeren Werkstoff und dient der statischen Abdichtung. Der Lippenring und der Stützkörper sind durch eine adhäsive Verbindung, d.h. durch unmittelbares Anformen und Anvulkanisieren des aus Gummi bestehenden Stützkörpers an den Außenumfang des Lippenrings, miteinander verbunden.

Aus der DE 33 19 696 A1 ist ein Gasdruckdämpfer in Zweirohr-Teleskop-Bauart bekannt, mit einer aus einem Innenrohr durch eine Kolbenstangenführung herausgeführten Kolbenstange, einer Kolbenstangedichtung und einer Gasdichtung, die durch eine unterseitig anliegende Schraubenfeder gegen das obere Ende eines Mantelrohrs gedrückt wird. Die Kolbenstangendichtung und die Gasdichtung sind als einteiliger Dichtring ausgebildet, wobei die Schraubenfeder, zur Erzielung einer axialen Vorspannung, zwischen der Kolbenstangenführung und einem Armierungsring angeordnet ist. Mittels des Armierungsrings wird die Dichtung gegen das radial nach innen umgebördelte Ende des Mantelrohrs gedrückt.

Aus der US 4,509,763 ist eine Dichtungs-Packung bekannt, die, im Längsschnitt betrachtet, im wesentlich hohlzylinderförmig ausgebildet ist und zumindest stirnseitig einerseits eine Schraubenfeder aufweist, die sich über den gesamten Umfang der Dichtungs-Packung erstreckt. Die Schraubenfeder kann dabei in einer entsprechend gestalteten Nut angeordnet sein. Nach einer anderen Ausgestaltung besteht die Möglichkeit, dass die Schraubenfeder vollständig vom elastomeren Werkstoff der Dichtungs-Packung ummantelt ist. Auch der innere Hohlraum der Schraubenfeder ist dabei vom Werkstoff der Dichtungs-packung vollständig ausgefüllt.

Aus der DE 21 13 557 ist ein Dichtring für hin- und hergehende Maschinenteile bekannt, wobei der Dichtring eine Abstreiflippe aufweist. Zur Erhöhung der radialen Anpresskraft ist in dem Dichtring eine Schraubenfeder vorgesehen, die in ihrer Umfangsrichtung auf Zug vorgespannt ist. Diese Schraubenfeder wird zusätzlich dazu benutzt, eine an den Dichtkörper angeformte Dichtlippe gegen den Nutgrund unter elastischer Vorspannung anzudrücken.

### Darstellung der Erfindung

Der Erfindung liegt die Aufgabe zugrunde, einen Abstreifer der eingangs genannten Art derart weiterzuentwickeln, dass sich eine gute Anpassung des Lippenrings an die jeweiligen Gegebenheiten des Anwendungsfalles ergibt und dass der Lippenring im Reparaturfall des Abstreifers einfach und separat austauschbar ist. Außerdem soll der Abstreifer einfach montiert und verliersicher am Stützkörper gehalten werden können und die Qualität der Verbindung zwischen Lippenring und Stützkörper soll durch eine einfache visuelle Qualitätssicherung beurteilbar sein.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Abstreifer vorgesehen, der als Lippenring ausgebildet und ungebunden sowie zerstörungsfrei lösbar an einem Stützkörper festlegbar ist, wobei der Lippenring einen Klemmwulst aufweist, in dem eine ringförmig ausgebildete Schraubenfeder angeordnet ist und wobei der Klemmwulst unter radialer Vorspannung an einer Gegenfläche des Stützkörpers festlegbar ist, wobei die Gegenfläche des Stützkörpers als Hinterschneidung ausgebildet ist und wobei der Klemmwulst in die Hinterschneidung einschnappbar ist.

Die Gegenflächen kann nach einer ersten Ausgestaltung konkav gewölbt und im Wesentlichen kongruent zur radial angrenzenden Oberfläche des Klemmwulstes ausgebildet sein.

Nach einer zweiten Ausgestaltung kann die Gegenfläche als zylindrische Hinterschneidung ausgebildet sein.

Der Lippenring kann radial innen angeordnet sein, der Stützkörper radial außen, wobei die Schraubenfeder als Schraubendruckfeder ausgebildet ist und wobei der Klemmwulst die Gegenfläche unter radial nach außen gerichteter Vorspannung anliegend berührt. Die Gegenfläche kann dabei beispielsweise durch eine Begrenzungswand einer Ausnehmung im Stützkörper gebildet sein. Bei einer solchen Ausgestaltung ist von Vorteil, dass durch die ungebundene und zerstörungsfrei lösbare Verbindung von Lippenring und Stützkörper aneinander die Teile jeweils separat austauschbar sind. Für Anwendungsfälle, in denen der Lippenring einem hohen, abrasiven Verschleiß unterworfen ist, beispielsweise dadurch, dass das abzudichtende Medium viele, abrasiv wirksame Partikel enthält, ist von Vorteil, dass der verschlissene Lippenring einfach vom Stützkörper entfernt und durch einen neuen Lippenring ersetzt werden kann.

Die mechanische Verbindung von Lippenring und Stützkörper aneinander beruht hauptsächlich auf der radialen Vorspannung, mit der sich der Klemmwulst des Lippenrings an der Gegenfläche des Stützkörpers abstützt. Gelangt ein Lippenring zur Anwendung, der radial innen angeordnet ist und ein Stützkörper, der radial außen angeordnet ist, berühren sich der Klemmwulst und die Gegenfläche unter radial nach außen gerichteter Vorspannung anliegend. Von entscheidender Wichtigkeit ist dabei, dass innerhalb des Klemmwulstes eine Schraubenfeder angeordnet ist, da ein solches Bauteil gleichbleibend gute Gebrauchseigenschaften während einer langen Gebrauchsdauer aufweist. Eine unerwünschte Relaxation ist dadurch ausgeschlossen.

Würde demgegenüber ein Klemmwulst zur Anwendung gelangen, in dem keine Armierung beispielsweise in Form einer Schraubenfeder angeordnet ist, würde die Klemmkraft mit zunehmender Gebrauchsdauer allmählich nachlassen und die Gefahr bestünde, dass sich der Lippenring vom Stützkörper löst.

Die Schraubenfeder ist in sich geschlossen und ringförmig ausgebildet und hat dadurch den Vorteil, dass die radiale Vorspannung des Klemmwulstes entlang seines gesamten Umfangs von übereinstimmender Größe ist. Würde demgegenüber beispielsweise ein Ring aus metallischem Werkstoff zur Anwendung gelangen, müsste dieser aus Montagegründen geschlitzt ausgebildet sein, wobei die Klemmkraft im Bereich des Schlitzes abweichend von der Klemmkraft entlang des übrigen Umfangs ausfallen würde.

Die Ausnehmung des Stützkörpers ist als Hinterschneidung ausgebildet, wobei der Klemmwulst in die Hinterschneidung einschnappbar ist. Durch eine solche Hinterschneidung wird eine formschlüssige Verbindung von Lippenring und Stützkörper aneinander bewirkt. Durch die sichtbare formschlüssige Verbindung der Teile ist eine visuelle Qualitätssicherung wesentlich vereinfacht, im Gegensatz zu Abstreifern, bei denen Lippenring und Stützkörper nur durch Kraftschluss, ohne Formschluss miteinander verbunden sind.

Der Lippenring und der Stützkörper können kraft- und/oder formschlüssig miteinander verbunden sein. Eine kraftschlüssige Verbindung könnte beispielsweise dadurch erfolgen, dass alleine die Klemmkraft, mit der sich der Klemmwulst an der Gegenfläche abstützt und die Werkstoffpaarung der gegeneinander verklemmten Flächen die Verbindung bewirkt. Zusätzlich oder alternativ bestünde auch die Möglichkeit, im Bereich der beiden Klemmflächen beispielsweise eine Oberflächenprofilierung vorzusehen, die zusätzlich oder stattdessen eine formschlüssige Verbindung von Lippenring und Stützkörper aneinander bewirkt. Unabhängig davon, ob der Lippenring und der Stützkörper kraft- und/oder formschlüssig miteinander verbunden sind, sind die beiden Teile in jedem Fall ungebunden und zerstörungsfrei lösbar aneinander festgelegt.

Die Schraubenfeder kann vollständig vom Werkstoff des Lippenrings umschlossen sein. Durch die vollständige Ummantelung der Schraubenfeder vom Werkstoff des Lippenrings, ist die Schraubenfeder zuverlässig vor Korrosion geschützt. Einer zeit- und kostenaufwendigen Behandlung der Schraubenfeder, beispielsweise mit einer Korrosionsschutzschicht, bedarf es dadurch nicht.

Der innere Hohlraum der Schraubenfeder, den die Windungen der Schraubenfeder begrenzen, kann vom Werkstoff des Lippenrings vollständig ausgefüllt sein. Die Herstellung des Lippenrings ist durch eine solche Ausgestaltung wesentlich vereinfacht, da es keiner Abdichtung des inneren Hohlraums bei der Vulkanisation des Lippenrings bedarf. Durch die einfache Herstellung ist der Abstreifer insgesamt kostengünstig herstellbar.

Der Lippenring besteht bevorzugt aus einem elastomeren Werkstoff, wobei die Härte Shore A des Lippenrings 60 bis 95 betragen kann. Zur Erzielung einer guten Abdichtwirkung/Abstreifwirkung ist der zuvor genannte Werkstoff für die meisten Anwendungsfälle von Vorteil. Die Montage des Lippenrings im Stützkörper erfolgt derart, das der Lippenring im Bereich seines Klemmwulstes in radialer Richtung elastisch verformt und anschließend in den Stützkörper eingesetzt wird. Anschließend schnappt der Klemmwulst selbsttätig radial in seine herstellungsbedingte Form zurück und legt sich dadurch unverliebar an die Gegenfläche des Stützkörpers an. Die Schraubenfeder und der Lippenring können durch Vulkanisation miteinander verbunden sein. Durch eine adhäsive Verbindung entsteht eine vormontierbare Einheit, bestehend aus Lippenring und Schraubenfeder, wobei der Lippenring und die Schraubenfeder unlösbar und dadurch unverlierbar miteinander verbunden sind. Die Montage eines derartigen Abstreifers ist durch die in den Lippenring integrierte Schraubenfeder vereinfacht.

Der Stützkörper kann als Gehäuse von Stoßdämpfern, Hydraulik- oder Pneumatik-Aggregaten ausgebildet sein.

Die Schraubenfeder besteht bevorzugt aus einem rostfreien Federstahl, so dass der Abstreifer zur Abdichtung beliebiger Medien zur Anwendung gelangen kann, sofern der Elastomerwerkstoff des Lippenrings entsprechend resistent ausgewählt ist. Außerdem weist eine Schraubenfeder aus Federstahl auch während einer langen Gebrauchsdauer des Abstreifers keine nennenswerte Relaxation auf, so dass der Lippenring während der gesamten Gebrauchsdauer des Abstreifers stets sicher mit dem Stützkörper verbunden ist.

Der zuvor beschriebene Abstreifer kann als Stangendichtung verwendet werden.

### Ausführung der Erfindung

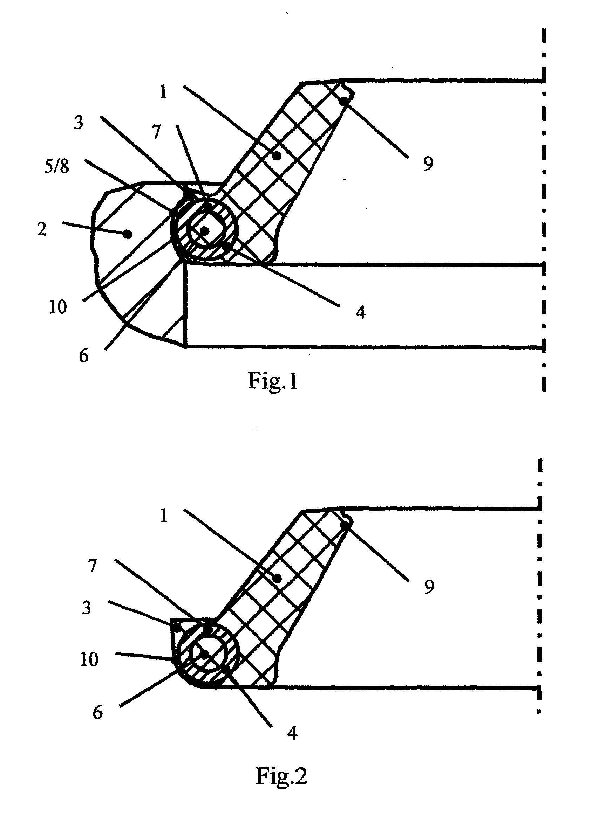

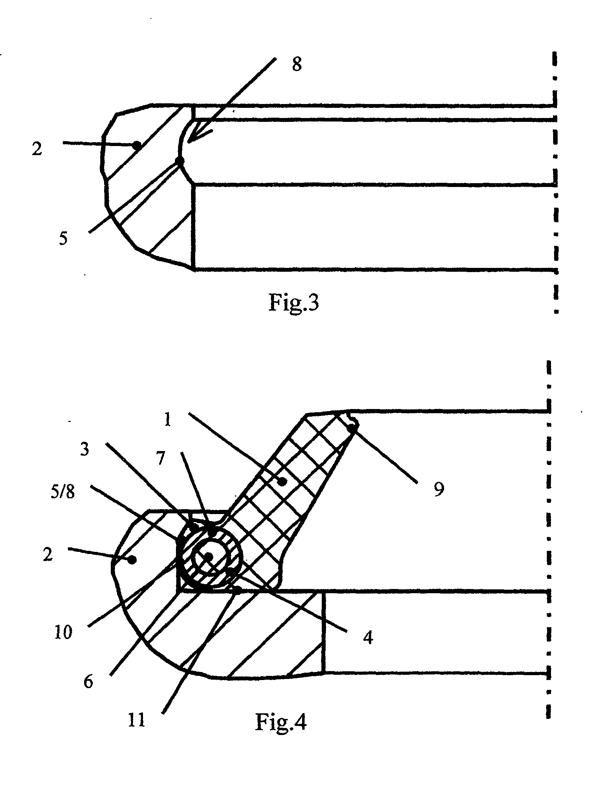

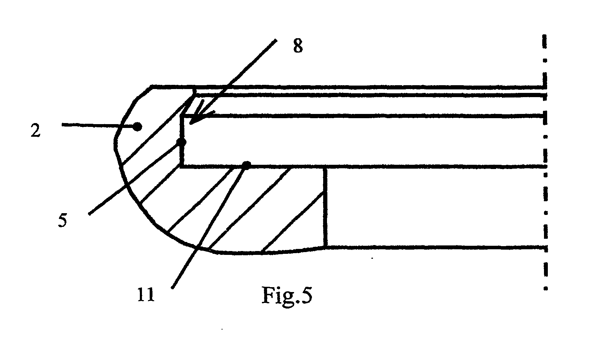

Ein Ausführungsbeispiel des erfindungsgemäßen Abstreifers wird nachfolgend anhand der beigefügten Figuren 1 bis 5 näher erläutert.
Die Figuren 1 bis 5 zeigen jeweils in schematischer Darstellung:
Fig. 1
   den erfindungsgemäßen Abstreifer, festgelegt in einem Stützkörper, in längsgeschnittener Darstellung,
Fig. 2
   den Lippenring aus Fig. 1 als Einzelteil in längsgeschnittener Darstellung und
Fig. 3
   den Stützkörper aus Fig. 1 als Einzelteil, ebenfalls in längsgeschnittener Darstellung,
Fig 4
   den erfindungsgemäßen Lippenring, eingebaut in einem Stützkörper mit axialem Anschlag,
Fig. 5
   den Stützkörper aus Fig. 4 als Einzelteil.

In Fig. 1 ist ein Ausführungsbeispiel des erfindungsgemäßen Abstreifers gezeigt. Der Abstreifer besteht aus einem Lippenring 1, aus elastomerem Werkstoff, der zur Abdichtung einer in axialer Richtung hin- und herbeweglichen, hier nicht dargestellten Stange vorgesehen ist. Der Lippenring 1 besteht aus einem elastomeren Werkstoff und weist radial innenseitig eine Dichtlippe 9 auf, die während der bestimmungsgemäßen Verwendung des Abstreifers die abzudichtende Stange unter radialer Vorspannung außenumfangsseitig dichtend umschließt. Radial außenseitig weist der Lippenring 1 einen Klemmwulst 3 auf, mit dem der Lippenring 1 radial innerhalb des Stützkörpers 2 gehalten ist. Innerhalb des Klemmwulstes 3 ist eine ringförmig ausgebildete, in sich geschlossene Schraubenfeder 4 angeordnet, die aus einem Federstahl besteht. Die Schraubenfeder 4 ist vollständig vom elastomeren Werkstoff des Lippenrings 1 umschlossen. Der Stützkörper 2 ist als Gehäuse ausgebildet und besteht aus einem zähhartem Werkstoff. Der Lippenring 1 hat in diesem Ausführungsbeispiel eine Härte Shore A von 75. Von entscheidender Wichtigkeit ist, dass der Lippenring 1 und der Stützkörper 2 ungebunden und zerstörungsfrei lösbar miteinander verbunden sind. Der Klemmwulst 3 ist an der Gegenfläche 5 des Stützkörpers 2 angeordnet und berührt die Gegenfläche 5 unter radial nach außen gerichteter Vorspannung anliegend. In dem hier gezeigten Ausführungsbeispiel erfolgt die Verbindung zwischen Lippenring 1 und Stützkörper 2 sowohl kraft- als auch formschlüssig. Der Kraftschluß zwischen Lippenring 1 und Stützkörper 2 erfolgt durch die radial nach außen gerichtete Klemmkraft des Klemmwulstes und die Reibkraft zwischen Lippenring und Stützkörper. Der Formschluss wird demgegenüber durch die Hinterschneidung 8 innerhalb der Gegenfläche 5 des Stützkörpers 2 erreicht, die den Klemmwulst 3 des Lippenrings 1 formschlüssig umschließt.

Im Reparaturfall besteht die Möglichkeit, den alten Lippenring 1 zerstörungsfrei vom Stützkörper 2 zu lösen und durch einen neuen Lippenring 1 zu ersetzen.

In Fig. 2 ist der Lippenring 1 aus Fig 1 als Einzelteil gezeigt. Die Ummantelung 10 der Schraubenfeder 4 ist derart gestaltet, dass sich im Anschluss an die Montage des Abstreifers eine elastische Verformung ergibt und der Klemmwulst 3 sicher an der Gegenfläche 5 gehalten ist.

In Fig. 3 ist der Stützkörper 2 aus Fig 1 als Einzelteil gezeigt, wobei der Stützkörper 2 in diesem Ausführungsbeispiel eine konkav gewölbte Gegenfläche 5 aufweist, die im Wesentlichen kongruent zur radial innen angrenzenden Oberfläche des Klemmwulstes 3 ausgebildet ist.

In den Figuren 4 und 5 ist ein anderes Ausführungsbeispiel eines Stützkörper 2 dargestellt, wobei der Stützkörper 2 einen Axialanschlag 11 aufweist und die Gegenfläche 5 als zylindrische Hinterschneidung ausgeführt ist.

## Patentansprüche

1. Abstreifer, der als Lippenring (1) ausgebildet und ungebunden sowie zerstörungsfrei lösbar an einem Stützkörper (2) festlegbar ist, wobei der Lippenring (1) einen Klemmwulst (3) aufweist, in dem eine ringförmig ausgebildete Schraubenfeder (4) angeordnet ist, wobei der Klemmwulst (3) unter radialer Vorspannung an einer Gegenfläche (5) des Stützkörpers (2) festlegbar ist und wobei die Gegenfläche (5) des Stützkörpers (2) als Hinterschneidung (8) ausgebildet ist und wobei der Klemmwulst (3) in die Hinterschneidung (8) einschnappbar ist.

2. Abstreifer nach Anspruch 1, **dadurch gekennzeichnet, dass** die Gegenfläche (5) konkav gewölbt ist und im Wesentlichen kongruent zur radial angrenzenden Oberfläche des Klemmwulstes (3) ausgebildet ist.

3. Abstreifer nach Anspruch 1, **dadurch gekennzeichnet, dass** die Gegenfläche (5) als zylindrische Hinterschneidung (8) ausgebildet ist.

4. Abstreifer nach einem der Anspruch 1 bis 3, **dadurch gekennzeichnet, dass** der Lippenring (1 ) radial innen angeordnet ist und der Stützkörper (2) radial außen, dass die Schraubenfeder (4) als Schraubendruckfeder ausgebildet ist und dass der Klemmwulst (3) die Gegenfläche (5) unter radial nach außen gerichteter Vorspannung anliegend berührt.

5. Abstreifer nach Anspruch 1 bis 4, **dadurch gekennzeichnet, dass** der Lippenring (1) und der Stützkörper (2) kraft- und/oder formschlüssig miteinander verbunden sind.

6. Abstreifer nach einem der Ansprüche 1 bis 5, **dadurch gekennzeichnet, dass** die Schraubenfeder (4) vollständig vom elastomeren Werkstoff des Lippenrings (1) umschlossen ist.

7. Abstreifer nach einem der Ansprüche 1 bis 6, **dadurch gekennzeichnet, dass** der Lippenring (1) aus einem elastomeren Werkstoff besteht.

8. Abstreifer nach Anspruch 7, **dadurch gekennzeichnet, dass** die Härte Shore A des Lippenrings (1) 60 bis 95 beträgt.

9. Abstreifer nach einem der Ansprüche 1 bis 8 **dadurch gekennzeichnet, dass** der Stützkörper (2) als Gehäuse oder als Bestandteil eines Gehäuses ausgebildet ist.

10. Abstreifer nach einem der Ansprüche 1 bis 9, **dadurch gekennzeichnet, dass** die Schraubenfeder (4) aus einem Federstahl besteht.

11. Abstreifer nach einem der Ansprüche 1 bis 10, **dadurch gekennzeichnet, dass** die Hinterschneidung (8) einen sich in radialer Richtung erstreckenden Anschlag (11) aufweist.

12. Verwendung eines Abstreifers gemäß einem der Ansprüche 1 bis 11 als Stangendichtung.

## Claims

1. Stripper which is designed as a lip ring (1) and can be secured on a supporting body (2) in an unbonded manner such that it can be released without being destroyed, the lip ring (1) having a clamping bead (3) in which an annular helical spring (4) is arranged, it being possible for the clamping bead (3) to be secured under radial prestressing on a mating surface (5) of the supporting body (2) it being possible for the mating surface (5) of the supporting body (2) to be formed as an undercut (8) and for the clamping bead (3) to be snapped into the undercut (8).

2. Stripper according to Claim 1, **characterized in that** the mating surface (5) is concavely curved and is formed substantially congruently in relation to the radially adjacent surface of the clamping bead (3).

3. Stripper according to Claim 1, **characterized in that** the mating surface (5) is formed as a cylindrical undercut (8).

4. Stripper according to any one of Claims 1 to 3, **characterized in that** the lip ring (1) is arranged on the inside in the radial direction and the supporting body (2) is arranged on the outside in the radial direction, **in that** the helical spring (4) is designed as a helical compression spring, and **in that** the clamping bead (3) is in abutting contact with the mating surface (5), with radially outwardly directed prestressing.

5. Stripper according to Claims 1 to 4, **characterized in that** the lip ring (1) and the supporting body (2) are connected to one another with a force and/or form fit.

6. Stripper according to any one of Claims 1 to 5, **characterized in that** the helical spring (4) is fully enclosed by the elastomer material of the lip ring (1).

7. Stripper according to any one of Claims 1 to 6, **characterized in that** the lip ring (1) consists of an elastomer material.

8. Stripper according to Claim 7, **characterized in that** the Shore A hardness of the lip ring (1) is from 60 to 95.

9. Stripper according to any one of Claims 1 to 8, **characterized in that** the supporting body (2) is designed as a housing or as a constituent part of a housing.

10. Stripper according to any one of Claims 1 to 9, **characterized in that** the helical spring (4) consists of a spring steel.

11. Stripper according to any one of Claims 1 to 10, **characterized in that** the undercut (8) has a radially extending stop (11).

12. Use of a stripper according to any one of Claims 1 to 11 as a rod seal.

## Revendications

1. Racleur, réalisé sous la forme d'une bague à lèvre (1) et pouvant être fixé sur un corps de support (2) d'une manière détachable sans destruction et sans y être lié, dans lequel la bague à lèvre (1) présente un bourrelet de blocage (3) dans lequel un ressort hélicoïdal annulaire (4) est disposé, dans lequel le bourrelet de blocage (3) peut être fixé contre une surface opposée (5) du corps de support (2) sous une précontrainte radiale et dans lequel la surface opposée (5) du corps de support (2) est formée par une contre-dépouille (8), et dans lequel le bourrelet de blocage (3) peut être coincé élastiquement dans la contre-dépouille (8).

2. Racleur selon la revendication 1, **caractérisé en ce que** la surface opposée (5) présente une courbure concave et coïncide essentiellement avec la surface radialement adjacente du bourrelet de blocage (3).

3. Racleur selon la revendication 1, **caractérisé en ce que** la surface opposée (5) est formée par une contre-dépouille cylindrique (8).

4. Racleur selon l'une quelconque des revendications 1 à 3, **caractérisé en ce que** la bague à lèvre (1) est disposée radialement à l'intérieur et le corps de support (2) radialement à l'extérieur, **en ce que** le ressort hélicoïdal (4) est un ressort hélicoïdal de compression et **en ce que** le bourrelet de blocage (3) touche la surface opposée (5) en étant appliqué sous une précontrainte dirigée radialement vers l'extérieur.

5. Racleur selon les revendications 1 à 4, **caractérisé en ce que** la bague à lèvre (1) et le corps de support (2) sont assemblés l'un à l'autre en complémentarité de force et/ou de forme.

6. Racleur selon l'une quelconque des revendications 1 à 5, **caractérisé en ce que** le ressort hélicoïdal (4) est entièrement entouré par le matériau élastomère de la bague à lèvre (1).

7. Racleur selon l'une quelconque des revendications 1 à 6, **caractérisé en ce que** la bague à lèvre (1) est constituée d'un matériau élastomère.

8. Racleur selon l'une quelconque des revendications 1 à 6, **caractérisé en ce que** la dureté Shore A de la bague à lèvre (1) vaut de 60 à 95.

9. Racleur selon l'une quelconque des revendications 1 à 8, **caractérisé en ce que** le corps de support (2) forme un boîtier ou une partie de boîtier.

10. Racleur selon l'une quelconque des revendications 1 à 9, **caractérisé en ce que** le ressort hélicoïdal (4) est constitué d'un acier à ressort.

11. Racleur selon l'une quelconque des revendications 1 à 10, **caractérisé en ce que** la contre-dépouille (8) présente une butée (11) s'étendant en direction radiale.

12. Utilisation du racleur selon l'une quelconque des revendications 1 à 11 comme joint d'étanchéité de barre.
